# EUROPEAN PATENT SPECIFICATION

(11) **EP 1 125 421 B1**
(45) Date of publication and mention of the grant of the patent: **14.06.2006**
(21) Application number: 99953452.2
(22) Date of filing: 29.10.1999
(51) Int. Cl.: H04L 29/12, H04L 12/46

(54) **DNS RELAY MODULE IN A DIGITAL NETWORK MODEM**
DNS WEITERLEITUNGSMODUL IN EINEM DIGITALEN NETZMODEM
MODULE DE RELAIS DNS DANS UN MODEM DE RESEAU NUMERIQUE

(30) Priority: 30.10.1998 CA 2252207
(43) Date of publication of application: 22.08.2001
(73) Proprietor: Eicon Technology Corporation, Montreal, Québec H4M 2V9 (CA)
(72) Inventor: MOINEAU, Gilbert, Lachine, Québec H8T 3N3 (CA); DUPLAIX, Jérôme, Montréal, Québec H1T 1Z4 (CA)
(74) Representative: Betten & Resch
(86) International application number: PCT/CA1999/001012
(87) International publication number: WO 2000/027092

(56) References cited:
- WO-A-98/26548
- ROWE K E ET AL: "Reliability of WWW name servers" COMPUTER NETWORKS AND ISDN SYSTEMS,NL,NORTH HOLLAND PUBLISHING. AMSTERDAM, vol. 27, no. 6, 1 April 1995 (1995-04-01), pages 773-780, XP004013179 ISSN: 0169-7552
- "NETBIOS ADD.NAME IN SWITCHED NETWORKS" IBM TECHNICAL DISCLOSURE BULLETIN,US,IBM CORP. NEW YORK, vol. 35, no. 2, 1 July 1992 (1992-07-01), pages 404-407, XP000313337 ISSN: 0018-8689

## Description

### Field of the Invention

The present invention relates to a digital network modem, such as an ISDN or a DSL modem, and more particularly, pertains to a digital network modem with a domain name server relay module.

### Background of the Invention

To facilitate accessing and locating computers on a TCP/IP network, a Domain Name Service (DNS) is used. This name resolution software enables users to refer to computers by domain name or host names. The DNS server maintains a database of domain names (host names) and their corresponding IP addresses. In an Internet Protocol (IP) network, the application queries a DNS to turn the name of the machine it wishes to communicate with into its IP address. NETwork Basic Input Output System (NetBIOS) is an application programming interface that augments the DOS BIOS by adding special functions for LANs. It is the native networking protocol in DOS and Windows networks. NetBIOS computers are identified by a unique 15-character long name, and Windows machines (NetBIOS machines) periodically broadcast their names on the network so that Network Neighborhood can catalog them.

WINS (Windows Internet Naming. Service) runs on Windows NT Server-based networks. It is a service that keeps a database of computer name-to-IP address mappings so that the NetBIOS computer names used in Windows network environments can be mapped to IP addresses when the underlying network is IP-based. When a user needs to access some computer, the NetBIOS name is referenced, and this name is handed to the nearest WINS server, which then returns an IP address. WINS is almost completely automatic from an administrative point of view. It builds its own database over time and automatically updates itself.

Computer networks are being installed In more and more residentiai, office and industrial environments, and the increase in the number of such networks has increased the need for skilled technicians required to configure and maintain such networks. Any simplfication of the task of network management is important from the perspective of both increased reliability and reduced training for the network manager. A Local Area Network (LAN) is a communications network that serves users within a confined geographiral area. It is made up of servers, workstations, a network operating system and a communications link.

A problem arises when a station on a LAN is requesting an IP address using a domain or host name, especially on small networks when no local DNS is available. The DNS specified for the station will receive the request for the IP address and a connection to the internet or to an external network will be made to reach the DNS server which will also try to find the domain or host name by verifying the existence of such a domain. In the case where the machine intended was on the LAN, the connection to the external network has caused unnecessary overhead in connection time and costs.

A second problem arises when a station often requests the same external IP address. The DNS must always be contacted through a connection to the external network to reply with the correct IP address. if these repeated connections are in a reduced period of time, it would most probably be unnecessary to request the IP address every time the domain name is to be contacted. This problem slows the connection causing unnecessary costs.

A conventional DNS is described in an article entitled "Reliability of WWW name servers" by Rowe K E et al., published in Computer Networks and ISDN systems in April 1995.

### Summary of the Invention

It would be advantageous to have a DNS on a digital modem, which would readily recognize communication requests between users of the LAN and reply locally while acting as a "local" DNS.

It would also be advantageous to have a DNS on a digital modem which would forward the requests for external network addresses to an external DNS and which would keep an up-to-date list of the replies received from the external DNS in order to rapidly answer a request for the same IP address at a later time.

It is therefore an object of the invention to provide a DNS relay module that provides a rapid response to domain name requests from a local store of IP addresses.

It is also an object of the present invention to provide a DNS relay module that replies to Internal Domain name requests by acting as a local DNS using a list of local hosts names automatically built by looking at NetBIOS over IP packets sent by Windows stations.

It is furthermore an object of the present invention to provide a DNS relay module that forwards IP address requests to an external DNS.

It is equally an object to provide such a DNS relay module that manages the sending of requests to more than one external DNSs in a manner transparent to the LAN clients to provide better efficiency.

It is also an object of the present invention to provide a DNS relay module that fetches, from the local store of IP addresses, the ISDN channel on which the communication should be sent.

According to a first aspect of the present invention, a network modem device connecting a Local Area Network (LAN) to a remote network is provided. It comprises a local store containing a list of domain or host names and attribute data; a Domain Name Service (DNS) relay module; and a router having a LAN interface connected to the LAN, a local connection to the DNS relay module and a network connection to the remote network; wherein the DNS relay module uses the list and the attribute data to respond to requests, received from the LAN via the router on the local connection, for a numeric address In response to a domain name when the domain name requested Is on the list, and the DNS relay module generates a DNS request and transmits the DNS request to an external DNS on the remote network via the local connection to the router, and the DNS relay module retuming a reply from the external DNS to the LAN via the local connection to the router to respond to the request for a numeric address when the domain name requested Is not on the Ilst.

According to a preferred embodiment of the present invention, the attribute data identifies a domain or host name ss a local station on the LAN and the DNS relay module, when the domain or host name is identified as a local station on the LAN, replies locally to said request.

According to another preferred embodiment of the present invention, the DNS relay module listens to NetBIOS Over IP packets of information, extracts local computer names and IP addresses from the packets and adds these computer names and IP addresses to the list of domain names.

According to another preferred embodiment of the present invention, the list comprises domain names looked-up on the external DNS and the DNS relay module automatically adds to this list of domain names looked-up on the external DNS, an entry corresponding to the reply from the external DNS.

According to another preferred embodiment of the present invention, the list comprises both domain names looked-up on an external DNS with corresponding attribute data and host names declared on the LAN with corresponding attribute data.

According to still another aspect of the present invention, there is provided a method for relaying DNS requests on a LAN connected through a router to a remote network by a network modem device. The method comprises a Domain Name Service (DNS) relay module receiving a domain name request via the DNS relay module and a network connection to the remote network, on the local connection, for a numeric address in response to a domain name; the DNS relay module using a local store containing a list of domain or host names and attribute data to respond to the request when the domain name requested is on the list, the DNS relay module generating a DNS request and transmitting the DNS request to an external DNS on the remote network via the local connection to the router, and the DNS relay module returning a reply from the external DNS to the LAN via the local connection to the router to respond to the request for a numeric address when the domain name requested is not on the list,

### Brief Description of the Drawings

The invention will be better understood by way of the following detailed description of a preferred embodiment with reference to the appended drawings, in which:

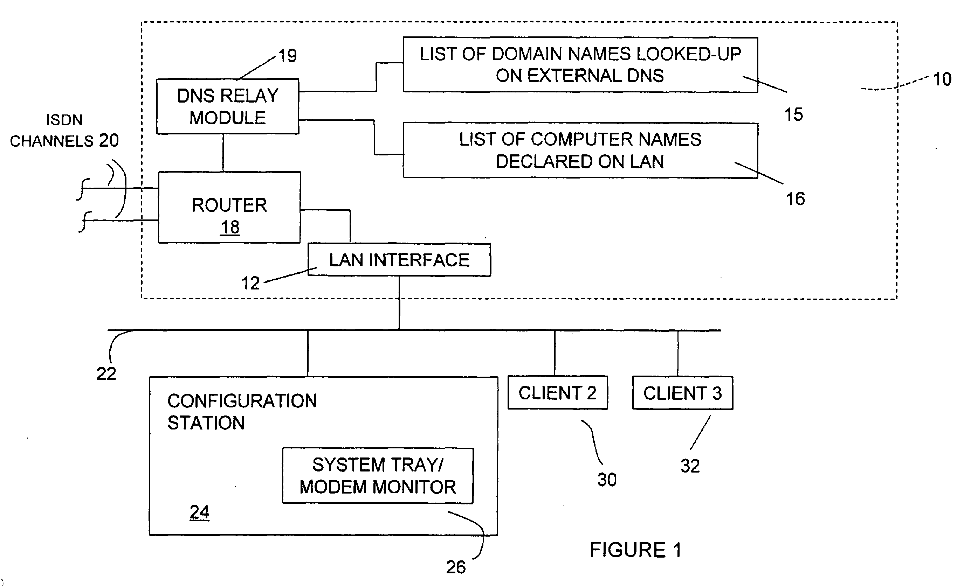

Fig. 1 is a schematic block diagram of the DNS Relay Module used in a digital modem.

### Detailed Description of the Preferred Embodiment

As illustrated in Fig. 1, the digital modem 10 according to the preferred embodiment is an ISDN modem having a plurality of functional components shown In Fig. 1. The separation of components illustrated in the separate blocks In Fig. 1 is for the purposes of illustration only, and does not necessarily reflect the physical separation of components in the real device which is built from both hardware and software/firmware components.

Modem 10 acts as a router or gateway to a remote network via, In the preferred embodiment, an ISDN connection 20. In the preferred embodiment, one channel of the ISDN line is connected to an Internet Service Provider (ISP) for Internet access, while the other channel is connected to a "private" intranet. When the modem 10 is connected to the Ethernet local area network (LAN) 22 and powered up, a LAN interface 12 and a System Tray / Modem Monitor 26 become active. The modem 10 includes a router 18 which communicates over connection 20 and with LAN interface 12. In operation, the modem 10 directs data traffic via router 18 onto the selected ISDN channel 20. Devices on LAN 22 send packets of information to one of the ISDN channels by sending a packet addressed to the modem 10 with the desired destination IP address and message content contained in the packet. The router 18 forwards the message on one of the ISDN channels to the desired IP address.

In the reverse direction, router 18 receives packets from lines 20 and determines the desired destination on LAN 22, and forwards the packets via interface 12 on LAN 22 with the correct desired destination address. In the preferred embodiment in which one channel is used for the intranet and the other for the Internet, router 18 also switches packets received from the LAN 22 based on the desired address either to the Internet channel or the intranet channel. Of course, both channels could be used for intranet or Internet purposes, or even for connecting to a different type of data network.

Modem 10 includes, in the preferred embodiment, a DNS relay module 19. From the devices' point of view on the LAN 22, DNS Relay Module 19 becomes the primary DNS that they can refer to. Thus, in accordance with TCP\IP, when an address is requested by domain name or host name, instead of using an IP address, the device sends a request to the DNS for the IP address for the domain or host name.

The DNS relay module 19 is however not a full DNS. The advantage of identifying module 19 as a DNS for the devices on the LAN 22 is that module 19 can contain lists of frequently-used domain names and can give specific responses immediately for those domain names, while other domain name requests can be passed on to a remote DNS, such as an ISP DNS. Furthermore, the domain name for an internal corporate domain name may be contained in module 19 or in a readily accessible list. For the requests to an internal corporate domain name, the IP address is returned directly instead of using the ISP DNS constantly. Fewer requests to the ISP DNS means faster service. Also, some intranet addresses may not be known to the outside world (private addresses) and the ISP DNS, for example. The DNS relay module 19 is also used to route the DNS requests to the Intranet DNS or the ISP DNS.

In the preferred embodiment of the present invention, the DNS Relay Module 19 compares the request from a station (24,30,32) on LAN 22 with at least one list. The list 15 can be configured and built by the Network Administrator using the Configuration station 24. Examples of useful lists are the following: a list of frequently-accessed domains, a list 15 of Domain names recently looked up on an external DNS, another list 16 of computer names declared on the LAN automatically built by looking at NetBIOS Over IP packets. These lists comprise the name of the domain or computer requested and the corresponding IP address. These lists would be consulted by the DNS Relay Module in an order appropriate for fastest results. In a preferred embodiment, the DNS Relay Module 19 consults two of these lists: the list 15 of domain names looked-up on an external DNS and the list 16 of computer names declared on its LAN. And, also in a preferred embodiment, the DNS consults the list 16 of computer names first, before consulting the list 15 of domain names.

These lists can be built up in many ways. A first manner is to make a new entry in the lists each time an IP address unknown from the lists is returned by the external DNS. In the case that the domain name or host name requested by a device on the LAN 22 is unknown to the DNS Relay Module 19 (i.e. it does not appear on any of its lists), the DNS Relay Module 19 forwards the request to an external DNS such as an ISP DNS. The DNS Relay Module 19 records the answer sent from the ISP DNS back to the device on the LAN 22 and adds this entry to one of its lists. These new entries can have an "expiry date". The life of an IP address can be set, for example, for one day. After a day, the DNS Relay Device 19 would forward the request to an external DNS as if the entry did not exist in the list and would record the reply. Since the local store on which these addresses are stored can be a stack, a First In, First Out queue could provide best results. Also, it should be possible at any time to reset these lists. When the table or list is full, the older entry is overwritten by the new one. The possibility of an overflow of addresses can also be eliminated by limiting the list to a certain amount of entries.

A second manner to make a new entry is to manually edit the lists. Only authorized users such as network administrators should be able to look at and edit the lists using the System Tray / Modem Monitor interface 26. These lists could be maintained manually for known changes in domain names or computer names.

DNS relay module 19 can also make use of the NETBIOS Over IP protocol supported in Microsoft Operating systems (Windows 95, 98 and NT). Using this protocol, the stations (24,30,32) on the LAN 22 advertise their computer (host) names and IP addresses. By intercepting these packets, the DNS relay module 19 can learn the DNS name of the PCs on the local LAN 22 and can store this information in a list (16). When a request for an IP address corresponding to an entry in that list is made, the DNS relay module replies to the request while acting as a local DNS.

In the preferred embodiment where one channel is for the Internet and the other channel is for the intranet, the DNS relay module 19 only routes DNS requests , based on the domain name included inside the request. For example, xxx.mycompany.com would be identified as an intranet address and xxx.ibm.com would be referred as an Internet address. Any other packets are routed by (18).

Of course, once the DNS Relay Module 19 has returned an IP address for the domain or computer name to the station, the communications request will be routed by router 18 to the appropriate channel of ISDN connection 20, either intranet or internet.

The DNS relay module 19 can also contain two or more external DNS addresses. When a request for a domain name that was sent to the external DNS fails for a certain amount of failures (preferably only after two failures), the module 19 switches to using another one of the plurality of external DNS addresses. In this way, greater reliability and efficiency for accessing domain names from the LAN 22 is afforded. The stations (24,30,32) on the LAN 22 only need to know one DNS address, that of the DNS Relay Module 19 while in fact they have the benefit of multiple DNS working for them.

While the invention has been described in connection with specific embodiments thereof, it will be understood that it is capable of further modifications and this application is intended to cover any variations, uses, or adaptations of the invention following, in general, the principles of the invention and including such departures from the present disclosure as come within known or customary practice within the art to which the invention pertains and as may be applied to the essential features hereinbefore set forth, and as follows in the scope of the appended claims.

## Claims

1. A network modem device (10) connecting a Local Area Network (LAN) to a remote network, comprising:
a local store containing a list of domain or host names and attribute data; wherein said list comprises:
a list (15) of domain names looked-up on an external DNS with corresponding attribute data; and
a list (16) host names declared on said LAN with corresponding attribute data;
a Domain Name Service (DNS) relay module (19) and
a router (18) having a LAN interface (12) connected to said LAN (22), a local connection to said DNS relay mocules (19) and a network connection to said remote network;
wherein said DNS relay module uses said list and said attribute data to respond to requests, received from said LAN via said router on said local connection, for a numeric address in response to a domain name when said domain name requested is on said list, and said DNS relay module generates a DNS request and transmits said DNS request to an external DNS on said remote network via said local connection to said router, and said DNS relay module retuming a reply from said external DNS to said LAN via said local connection to said router to respond to said request for a numeric address when said domain name requested is not on said list

2. A network modem device as claimed in claim 1, wherein said attribute data Is an IP address.

3. A network modem device as claimed In claim 1, wherein said attribute data identifies a domain or host name as a local station on said LAN and said DNS relay module.

4. A network modem device as daimed in claim 1, wherein said network connection is a connection to at least one ISDN channel (20).

5. A network modem device as claimed in claim 4, wherein said router (18) la connected to two ISDN channels: one for the intranet and one for the Internet.

6. A network modem device as claimed in claim 3, wherein said DNS relay module (19) is adapted to listen to NetBIOS Over IP packets of information on said LAN, to extract local computer names and associated IP addresses from said packets and to add said computer names and associated IP addresses to said list of domain names.

7. A network modem device as claimed in claim 2, wherein said list is a list of domain names looked-up on the external DNS, and said DNS relay module (19) automatically adds to said list (15) of domain names looked-up on the external DNS, an entry corresponding to said reply from said external DNS.

8. The device according to claim 1, wherein said device is a digital network modem.

9. The device according to claim 8, wherein said device is an ISDN modem.

10. The device according to claim 1, wherein said external DNS is one of a group of external DNSs.

11. The device as claimed in claim 1, wherein said list of domain names and attribute data has an expiry date and time, and said DNS relay module comprises a mechanism for requesting from an external DNS a newly fetched numeric address for said domain name when a next request for said domain name will be received, for restoring said newly fetched numeric address as the attribute data for said domain name in said list and for refreshing said expiry date and time.

12. A method for relaylng DNS requests on a LAN (22) connected through a router to a remote network by a network modem device, (10) comprising:
a Domain Name Service DNS relay module (19) receiving a domain name request via said router having a LAN interface (12) connected to said LAN, a local connection to said DNS relay module and a network connection to said remote network, on said local connection, for a numeric address In response to a domain name;
said DNS relay module (19) using a local store containing a list of domain or host names and attribute data to respond to said request when said domain name requested is on said list, wherein said list comprises:
a list (15) of domain names looked-up on an external DNS with corresponding attribute data; and
a list (16) host names declared on said LAN with corresponding attribute data;
and
said DNS relay module generating a DNS request and transmitting said DNS request to an external DNS on said remote network via said local connection to said router, and said DNS relay module returning a reply from said external DNS to said LAN via said local connection to said router to respond to said request for a numeric address when said domain name requested is not on said list.

13. A method as claimed in claim 12, wherein said attribute data identifies a domain name as a domain name for a device on said LAN.

14. A method as claimed in claim 12, wherein said generating comprises requesting a numeric address on said external DNS and responding to said request with a numeric address corresponding to said domain or host name.

15. A method as claimed in claim 12, wherein said attribute data is an IP address.

16. A method as claimed in claim 13, further comprising steps of listening to NetBIOS Over IF packets of information, extractlng local computer names and IP addresses from said packets and adding said computer names and IP addresses to said list of domain names.

17. A method as claimed In claim 16, wherein said list of computer names declared on the LAN is automatically built using packets of information sent by stations on said LAN using NetBIOS Over IP protocol in which said station name and IP address is available.

18. A method as claimed in claim 12, further comprising a step of automatically adding to said list of domain names looked-up on the external DNS, an entry corresponding to said reply from said external DNS and wherein said list is a list of domain names looked-up on the external DNS.

19. A method as claimed in claim 12, wherein said external DNS is one of a group of external DNSs.

20. A method as claimed in claim 12, wherein said list of domain names and attribute data has an expiry date and time and said method further comprises the steps of
requesting from an external DNS, a newly fetched numeric address for said domain name when a next request for said domain name will be received,
restoring said newly fetched numeric address as the attribute data for said domain name in Bald list and
refreshing said expiry date and time,

## Patentansprüche

1. Netz-Modemvorrichtung (10), die ein Nahbereichsnetz (LAN) mit einem entfernten Netz verbindet und umfasst:
einen lokalen Speicher, der eine Liste von Domänennamen oder Host-Namen und Attributdaten enthält; wobei die Liste umfasst:
eine Liste (15) von Domänennamen, die in einem externen DNS mit entsprechenden Attributdaten nachgeschlagen werden; und
eine Liste (16) von Host-Namen, die in dem LAN mit entsprechenden Attributdaten deklariert werden;
ein Domänennamendienst-Weiterleitungsmodul (DNS-Weiterleitungsmodul) (19); und
einen Router (18), der eine LAN-Schnittstelle (12), die mit dem LAN (22) verbunden ist, eine lokale Verbindung zu dem DNS-Weiterleitungsmodul (19) sowie eine Netzverbindung mit dem entfernten Netz besitzt;
wobei das DNS-Weiterleitungsmodul die Liste und die Attributdaten dazu verwendet, auf von dem LAN über den Router auf der lokalen Verbindung empfangene Anforderungen einer numerische Adresse in Reaktion auf einen Domänennamen zu antworten, wenn sich der angeforderte Domänenname in der Liste befindet, und wobei das DNS-Weiterleitungsmodul eine DNS-Anforderung erzeugt und die DNS-Anforderung an einen externen DNS in dem entfernten Netz über die lokale Verbindung zu dem Router sendet und das DNS-Weiterleitungsmodul eine Antwort von dem externen DNS zu dem LAN über die lokale Verbindung zu dem Router zurückleitet, um auf die Anforderung einer numerische Adresse zu antworten, wenn sich der angeforderte Domänenname nicht in der Liste befindet.

2. Netz-Modemvorrichtung nach Anspruch 1, bei der die Attributdaten eine IP-Adresse sind.

3. Netz-Modemvorrichtung nach Anspruch 1, bei der die Attributdaten einen Domänennamen oder Host-Namen als eine lokale Station in dem LAN und in dem DNS-Weiterleitungsmodul identifizieren.

4. Netz-Modemvorrichtung nach Anspruch 1, bei der die Netzverbindung eine Verbindung zu wenigstens einem ISDN-Kanal (20) ist.

5. Netz-Modemvorrichtung nach Anspruch 4, bei der der Router (18) mit zwei ISDN-Kanälen, einer für das Intranet und einer für das Internet, verbunden ist.

6. Netz-Modemvorrichtung nach Anspruch 3, bei der das DNS-Weiterleitungsmodul (19) so beschaffen ist, dass es auf NetBIOS-Over-IP-Informationspakete in dem LAN hört, um Namen lokaler Computer und zugeordnete IP-Adressen aus dem Paket zu extrahieren und um die Computernamen und die zugeordneten IP-Adressen zu der Liste von Domänennamen hinzuzufügen.

7. Netz-Modemvorrichtung nach Anspruch 2, bei der die Liste eine Liste von Domänennamen ist, die in dem externen DNS nachgeschlagen werden, und das DNS-Weiterleitungsmodul (19) Domänennamen, die in dem externen DNS nachgeschlagen werden, und einen Eintrag, der der Antwort von dem externen DNS entspricht, automatisch zu der Liste (15) hinzufügt.

8. Vorrichtung nach Anspruch 1, wobei die Vorrichtung ein Digitalnetz-Modem ist.

9. Vorrichtung nach Anspruch 8, wobei die Vorrichtung ein ISDN-Modem ist.

10. Vorrichtung nach Anspruch 1, bei der der externe DNS ein DNS einer Gruppe externer DNS ist.

11. Vorrichtung nach Anspruch 1, bei der die Liste von Domänennamen und von Attributdaten ein Ablaufdatum und eine Ablaufzeit enthält und das DNS-Weiterleitungsmodul einen Mechanismus umfasst, um von dem externen DNS eine neu geholte numerische Adresse für den Domänennamen anzufordern, wenn eine nächste Anforderung des Domänennamens empfangen wird, um die neu geholte numerische Adresse als die Attributdaten für den Domänennamen in der Liste wiederherzustellen und um das Ablaufdatum und die Ablaufzeit aufzufrischen.

12. Verfahren zum Weiterleiten von DNS-Anforderungen in einem LAN (22), das über einen Router durch eine Netz-Modemvorrichtung (10) mit einem entfernten Netz verbunden ist, das umfasst:
ein Domänennamendienst-Weiterleitungsmodul oder DNS-Weiterleitungs-modul (19) empfängt in Reaktion auf einen Domänennamen auf der lokalen Verbindung über den Router, der eine mit dem LAN verbundene LAN-Schnittstelle (12), eine lokale Verbindung mit dem DNS-Weiterleitungsmodul und eine Netzverbindung mit dem entfernten Netz besitzt, eine Domänennamen-Anforderung einer numerischen Adresse;
das DNS-Weiterleitungsmodul (19) verwendet einen lokalen Speicher, der eine Liste von Domänennamen oder Host-Namen und Attributdaten enthält, um auf die Anforderung zu antworten, wenn sich der angeforderte Domänennamen in der Liste befindet, wobei die Liste umfasst:
eine Liste (15) von Domänennamen, die in einem externen DNS mit entsprechenden Attributdaten nachgeschlagen werden; und
eine Liste (16) von Host-Namen, die in dem LAN mit entsprechenden Attributdaten deklariert werden; und
das DNS-Weiterleitungsmodul erzeugt eine DNS-Anforderung und überträgt die DNS-Anforderung an einen externen DNS in dem entfernten Netz über die lokale Verbindung mit dem Router und das DNS-Weiterleitungsmodul leitet eine Antwort von dem externen DNS zu dem LAN über die lokale Verbindung zu dem Router zurück, um auf die Anforderung einer numerischen Adresse zu antworten, wenn sich der angeforderte Domänenname nicht in der Liste befindet.

13. Verfahren nach Anspruch 12, bei dem die Attributdaten einen Domänennamen als einen Domänennamen für eine Vorrichtung in dem LAN identifizieren.

14. Verfahren nach Anspruch 12, bei dem das Erzeugen das Anfordern einer numerischen Adresse in dem externen DNS und das Antworten auf die Anforderung mit einer numerischen Adresse, die dem Domänennamen oder Host-Namen entspricht, umfasst.

15. Verfahren nach Anspruch 12, bei dem die Attributdaten eine IP-Adresse sind.

16. Verfahren nach Anspruch 13, das ferner die Schritte des Hörens auf NetBIOS-Over-IP-Informationspakete, des Extrahierens von Namen lokaler Computer und von IP-Adressen aus den Paketen und des Hinzufügens der Computernamen und der IP-Adressen zu der Liste von Domänennamen umfasst.

17. Verfahren nach Anspruch 16, bei der die Liste von Computernamen, die in dem LAN deklariert sind, unter Verwendung von Informationspaketen, die von Stationen in dem LAN gesendet werden, unter Verwendung des NetBIOS-Over-IP-Protokolls, in dem der Stationenname und die IP-Adresse verfügbar sind, automatisch aufgebaut wird.

18. Verfahren nach Anspruch 12, das ferner einen Schritt umfasst, bei dem zu der Liste von Domänennamen, die in dem externen DNS nachgeschlagen werden, automatisch ein Eintrag hinzugefügt wird, der der Antwort von dem externen DNS entspricht, wobei die Liste eine Liste von Domänennamen ist, die in dem externen DNS nachgeschlagen wird.

19. Verfahren nach Anspruch 12, bei dem der externe DNS ein DNS aus einer Gruppe externer DNS ist.

20. Verfahren nach Anspruch 12, bei dem die Liste von Domänennamen und von Attributdaten ein Ablaufdatum und eine Ablaufzeit besitzt, wobei das Verfahren ferner die folgenden Schritte umfasst:
Anfordern einer neu geholten numerischen Adresse für den Domänennamen von einem externen DNS, wenn eine nächste Anforderung für den Domänennamen empfangen wird,
Wiederherstellen der neu geholten numerischen Adresse als die Attributdaten für den Domänennamen in der Liste und
Auffrischen des Ablaufdatums und der Ablaufzeit.

## Revendications

1. Un dispositif de modem réseau (10) pour connecter un réseau local (LAN) à un réseau distant, comprenant:
un stockage local comprenant une liste de noms de domaine ou de noms de centre serveur et une donnée d'attribut; ladite liste comprenant une liste (15) de noms de domaine lue sur un service de nom de domaine externe avec une donnée d'attribut correspondante et une liste (16) de noms de centre serveur déclarés sur ledit réseau local avec une donnée d'attribut correspondante;
un module relais de service de nom de domaine (DNS) (19), et
un routeur (18) comprenant une interface LAN (12) connecté audit LAN (22), une connection locale audit module relais de service de nom de domaine (19) et une connection réseau audit réseau distant;
dans lequel ledit module relais de service de nom de domaine utilise ladite liste et ladite donnée d'attribut pour répondre à des requêtes, reçues dudit réseau local via ledit routeur sur ladite connection locale, pour une adresse numérique en réponse à un nom de domaine lorsque ledit nom de domaine demandé est sur ladite liste, et ledit module relais de service de nom de domaine génère une requête de service de nom de domaine et transmet ladite requête de service de nom de domaine à un service de nom de domaine externe sur ledit réseau distant via ladite connection locale audit routeur, et ledit module relais de service de nom de domaine retourne une réponse dudit service de nom de domaine externe audit réseau local via la connection locale audit routeur pour répondre à ladite requête pour une adresse numérique quand ledit nom de domaine demandé n'est pas sur la liste.

2. Un dispositif de modem réseau tel que revendiqué à la revendication 1, dans lequel la donnée d'attribut comprend une adresse IP.

3. Un dispositif de modem réseau tel que revendiqué à la revendication 1, dans lequel la donnée d'attribut identifie un nom de domaine ou un nom de centre serveur comme une station locale sur ledit réseau local et ledit module relais de service de nom de domaine.

4. Un dispositif de modem réseau tel que revendiqué à la revendication 1, dans lequel ladite connection réseau est une connection à au moins un canal de réseau numérique à intégration de service (20).

5. Un dispositif de modem réseau tel que revendiqué à la revendication 4, dans lequel ledit routeur (18) est connecté à deux canaux de réseau numériques à intégration de service: un pour l'intranet et un pour l'Internet.

6. Un dispositif de modem réseau tel que revendiqué à la revendication 3, dans lequel ledit module relais de service de nom de domaine (19) est adapté pour écouter des paquets d'information NetBIOS sur IP sur ledit réseau local, est adapté pour extraire des noms d'ordinateurs locaux et des adresses IP associées dans lesdits paquets et est adapté pour rajouter les noms d'ordinateurs locaux et les adresses IP associées à ladite liste de noms de domaine.

7. Un dispositif de modem réseau tel que revendiqué à la revendication 2, dans lequel ladite liste comprend une liste de noms de domaine lue sur le service de nom de domaine externe et ledit module relais de service de nom de domaine (19) rajoute automatiquement à ladite liste (15) de nom de domaine lue sur le service de nom de domaine externe, une entrée correspondant à ladite réponse provenant dudit service de nom de domaine externe.

8. Le dispositif tel que revendiqué à la revendication 1, dans lequel ledit dispositif est un modem réseau numérique.

9. Le dispositif tel que revendiqué à la revendication 8, dans lequel le dispositif est un modem pour réseau numérique à intégration de service.

10. Le dispositif tel que revendiqué à la revendication 1, dans lequel le service de nom de domaine externe est un d'un groupe de service de nom de domaine externe.

11. Le dispositif tel que revendiqué à la revendication 1, dans lequel ladite liste de nom de domaine et la donnée d'attribut a une date et une heure d'expiration, et ledit module relais de service de nom de domaine comprend un mécanisme pour demander à un service de nom de domaine externe une adresse numérique nouvellement cherchée pour ledit nom de domaine quand une prochaine requête pour le nom de domaine sera reçue, pour restocker ladite adresse numérique nouvellement cherchée comme une donnée d'attribut pour ledit nom de domaine dans ladite liste et pour rafraîchir ladite date et heure d'expiration.

12. Une méthode pour transmettre par relais des requêtes de services de nom de domaines sur un réseau local (22) connecté à travers un routeur à un réseau distant par un dispositif de modem réseau (10) comprenant :
un module relais de service de nom de domaine (19) recevant une requête de nom de domaine via ledit routeur comprenant une interface de réseau local (12) connectée audit réseau local, une connection locale audit module relais de service de nom de domaine et une connection réseau audit réseau distant, sur ladite connection locale, pour une adresse numérique en réponse à nom de domaine;
ledit module relais de service de nom de domaine (19) utilisant un stockage local comprenant une liste de domaine ou de nom de domaine est une donnée d'attribut pour répondre à ladite requête quand ledit nom de domaine demandé et sur ladite liste, dans lequel ladite liste comprend une liste (15) de noms de domaine accédée sur un service de nom de domaine externe avec une donnée d'attribut correspondante; et une liste (16) de noms de domaine déclarée sur ledit réseau local avec une donnée d'attribut correspondante; et
ledit module relais de service de nom de domaine génère une requête de service de nom de domaine et transmet ladite requête de service de nom de domaine à un service de nom de domaine externe sur ledit réseau distant via ladite connection locale audit routeur, et ledit service relais de nom de domaine retourne une réponse dudit service de nom de domaine externe audit réseau local via ladite connection locale audit routeur pour répondre à ladite demande pour une adresse numérique quand ledit nom de domaine demandé n'est par sur ladite liste.

13. Une méthode telle que revendiquée à la revendication 12, dans laquelle la donnée d'attribut identifie un nom de domaine comme un nom de domaine pour un dispositif sur ledit réseau local.

14. Une méthode telle que revendiquée à la revendication 12, dans laquelle ladite génération comprend la demande d'une adresse numérique sur ledit service de nom de domaine externe et la réponse à ladite demande avec une adresse numérique correspondant audit nom de domaine ou audit nom de serveur réseau.

15. Une méthode telle que revendiquée à la revendication 12 dans laquelle la donnée d'attribut comprend une adresse Internet.

16. Une méthode telle que revendiquée à la revendication 13, comprenant de plus les étapes d'écouter des paquets de type NetBIOS sur IP, d'extraire les noms des ordinateurs locaux et des adresses Internet à partir desdits paquets et de rajouter lesdits noms d'ordinateurs et lesdites adresses Internet sur ladite liste de noms de domaine.

17. Une méthode telle que revendiquée à la revendication 16, dans laquelle ladite liste de noms d'ordinateur déclarée sur ledit réseau local est automatiquement construite à partir des paquets d'information envoyés par les stations dudit réseau local en utilisant le protocole NetBIOS sur IP dans lequel le nom de ladite station et l'adresse IP correspondante est disponible.

18. Une méthode telle que revendiquée à la revendication 12, comprenant de plus une étape de rajout automatique à ladite liste de nom de domaine accédée sur le service de nom de domaine externe, d'une entrée correspondant à ladite réponse dudit service de nom de domaine externe et dans laquelle ladite liste comprend une liste de noms de domaine accédée par ledit service de nom de domaine externe.

19. Une méthode telle que revendiquée à la revendication 12, dans laquelle ledit service de nom de domaine externe est un parmi un groupe de service de nom de domaine externe.

20. Une méthode telle que revendiquée à la revendication 12, dans laquelle ladite liste de nom de domaine et ladite donnée d'attribut possède une heure et une date d'expiration et dans laquelle ladite méthode comprend de plus les étapes de faire la demande à partir d'un service de nom de domaine externe, d'une adresse numérique nouvellement cherchée pour ledit nom de domaine quand une nouvelle requête pour ledit nom de domaine sera reçue,
de faire la restauration de ladite adresse numérique comme une donnée d'attribut pour le nom de domaine dans ladite liste et
de rafraîchir l'heure et la date d'expiration.
